# FASCICULE DE BREVET EUROPEEN

(11) **EP 0 473 487 B1**
(45) Date de publication et mention de la délivrance du brevet: **05.01.1994**
(21) Numéro de dépôt: 91402210.8
(22) Date de dépôt: 08.08.1991
(51) Int. Cl.: B32B 5/26, B32B 27/12, A62C 8/00, E04B 1/94

(54) **Ecrans thermiques à hautes performances**
Hochleitungswärmeschirme
High performance heat screens

(30) Priorité: 21.08.1990 FR 9010518
(43) Date de publication de la demande: 04.03.1992
(73) Titulaire: AEROSPATIALE Société Nationale Industrielle, 75781 Paris Cédex 16 (FR)
(72) Inventeur: Metivaud, Guy, F-33400 Talence (FR)
(74) Mandataire: Bonnetat, Christian

(56) Documents cités:
- EP-A- 0 079 808
- EP-A- 0 150 385
- EP-A- 0 355 193
- FR-A- 2 632 866
- GB-A- 1 577 771
- GB-A- 2 191 792
- US-A- 4 342 803
- US-A- 4 397 910
- US-A- 4 540 617
- WORLD PATENTS INDEX LATEST Accession No. 86-255989 Week 39 Derwent Publications Ltd., London GB &JP-A-61185444 (HIRAOKA SHOKUSEN KK) 19-08-86

## Description

La présente invention concerne les écrans thermiques à hautes performances, souples ou rigides, particulièrement appropriés à assurer des protections en cas d'incendie.

On connaît déjà, par exemple par le document GB-A-2 191 792, des tissus pare-flamme réalisés en fibres organiques oxydées carbonisables et capables d'absorber fortement le flux thermique infrarouge d'un incendie. De tels tissus sont de préférence du type à mailles et lesdites fibres organiques peuvent être à base de polyacrylonitrile. D'autres fibres, telles que des fibres aramides, sont prévues pour faciliter le tissage. De tels tissus sont par exemple fabriqués et vendus, sous le nom commercial MONTSEGUR, par la Société Ariégeoise de Bonneterie, 09300 MONTFERRIER, FRANCE.

Par ailleurs, par les documents EP-A-0 079 808 et US-A-4 397 910, on connaît des produits résistant à de hautes températures et constitués de nappes superposées imprégnées ou recouvertes d'une résine de silicone.

L'objet de la présente invention est de réaliser des écrans thermiques à hautes performances mettant à profit les propriétés d'absorption du flux thermique des tissus pare-flamme mentionnés ci-dessus.

A cette fin, selon l'invention, l'écran thermique, notamment pour la protection contre un incendie, est caractérisé en ce qu'il est réalisé en une matière en feuille comportant un matelas constitué par la superposition d'une pluralité de couches de tissus en fibres à base de polyacrylonitrile oxydées carbonisables, en ce que la face dudit matelas dirigée vers ledit incendie est recouverte d'une couche de silicone pur et en ce que la face dudit matelas dirigée à l'opposé dudit incendie est recouverte d'une couche de silicone chargé endothermique.

Ainsi, grâce à l'invention, on obtient une barrière thermique particulièrement efficace. En effet, ladite couche de silicone pur, dirigée vers la source chaude (incendie), se décompose sous l'effet de l'agression thermique, la décomposition du silicone absorbant d'abord des calories et laissant ensuite un résidu de silice qui obstrue les mailles des couches de tissu, ce qui constitue une barrière contre la pénétration des gaz chauds. De plus, la couche de silicone chargé endothermique, dirigée à l'opposé de l'incendie, absorbe les calories.

Pour illustrer l'efficacité de la coopération de la couche de silicone pur et de la couche de silicone chargé endothermique, on a réalisé deux éprouvettes plates, comportant chacune cinq couches superposées du même tissu en fibres organiques oxydées carbonisables. La première des éprouvettes est enrobée de silicone pur, tandis que, pour la seconde éprouvette, une de ses faces est recouverte de silicone pur et l'autre de silicone chargé endothermique. Ensuite, on a soumis chaque éprouvette à l'action d'une flamme à 1100°C, la face de silicone pur de la seconde éprouvette étant tournée vers ladite flamme.

On constate que la température de la face du matelas opposée à la flamme atteint 250°C, en 2 minutes et cinquante-quatre secondes pour la première éprouvette, et en 4,5 minutes pour la seconde éprouvette. On voit donc que, dans la seconde éprouvette, la couche de silicone chargé endothermique disposée sur la face du matelas opposée à la flamme absorbe les calories, tandis que la couche de silicone pur orientée vers la flamme permet de retarder la combustion de la matière.

De préférence, le silicone chargé endothermique est du type de celui décrit dans le document FR-A-2 632 866.

Pour améliorer encore les propriétés d'isolation thermique de la matière conforme à la présente invention, il est possible d'imprégner --par tout moyen connu-- au moins certaines couches de tissu du matelas avec du silicone pur ou chargé. Dans ce cas, les couches de tissu destinées à être dirigées vers la source chaude sont avantageusement imprégnées de silicone pur, tandis que celles destinées à être dirigées du côté opposé sont de préférence imprégnées de silicone chargé endothermique.

De telles imprégnations de silicone peuvent servir de plus à la solidarisation des couches de tissus successives. Toutefois, en tant que de besoin, il est possible de solidariser entre elles au moins certaines des couches de tissus par piqûre dans l'épaisseur du matelas à l'aide d'un fil réfractaire (silice par exemple) ou d'un fil combustible ou à l'aide de points de colle (par exemple à base de silicone). On remarquera toutefois que chaque point de piqûre constitue un couloir de passage pour les gaz chauds et que la solidarisation des couches de tissu par piqûre peut ne pas être appropriée pour certaines applications.

Eventuellement, une ou plusieurs couches d'un tissu réfractaire de silice ou de céramique peut être incorporée audit matelas, de préférence en surface de celui-ci.

Les tissus en fibres organiques oxydées carbonisables sont souples en eux-mêmes. Il en est donc de même du matelas obtenu par la superposition d'une pluralité de couches de tels tissus.

Cependant, grâce aux couches de silicone recouvrant les faces dudit matelas et aux imprégnations des couches de tissus du matelas, on peut régler le degré de souplesse de l'écran conforme à la présente invention. En effet, la souplesse de cet écran dépend de l'épaisseur desdites couches de silicone et du nombre des couches de tissus du matelas subissant une imprégnation. Ainsi, selon l'invention, on peut obtenir un écran dont la souplesse --et donc la rigidité-- est appropriée à l'application recherchée.

Par ailleurs, éventuellement, on peut par moulage donner à l'écran de l'invention toute forme désirée, par exemple la forme de coque ou de capot s'adaptant au contour d'objets ou de dispositifs à protéger.

Ainsi, grâce à l'invention, on peut réaliser des écrans thermiques en forme de couvertures souples s'adaptant aux formes très variées d'objets ou d'équipements, de bandes souples pouvant être enroulées autour de tuyauteries ou de câblages électriques, de capots souples ou rigides adaptés en forme à des dispositifs particuliers, etc...

La masse des écrans thermiques conformes à l'invention est relativement peu élevée, de sorte que ceux-ci sont particulièrement --quoique non exclusivement-- appropriés à être utilisés dans des applications aéronautiques ou spatiales. Ils permettent alors notamment de maintenir les équipements vitaux à des températures de l'ordre de 100°C à 200°C pendant plusieurs minutes, même dans le cas d'incendies produisant des flammes dont la température est de l'ordre de 1000 à 1100°C.

On remarquera que l'écran conforme à la présente invention, outre ses propriétés élevées de protection thermique et sa masse peu élevée, est facile à manipuler et éventuellement à découper pour adapter son contour à celui d'un objet à protéger ou encore pour obtenir des bandes.

Les figures du dessin annexé feront bien comprendre comment l'invention peut être réalisée.

La figure 1 représente, en coupe schématique agrandie, un mode de réalisation particulier, mais préférentiel, d'un écran conforme à la présente invention.

La figure 2 représente une utilisation particulière de l'écran conforme à la présente invention.

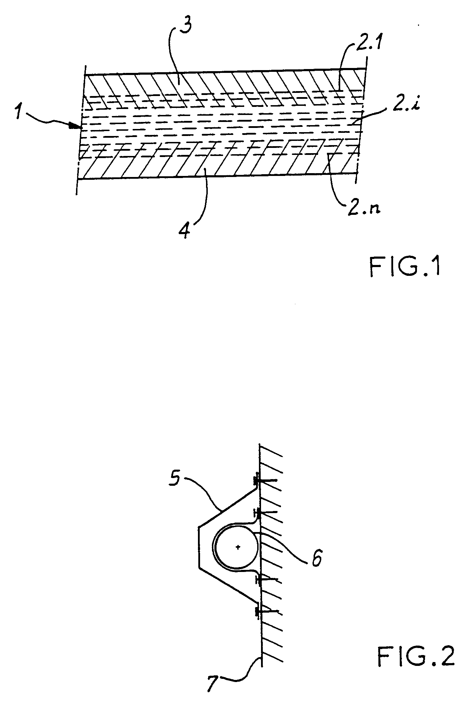

L'écran de matière en feuille, conforme à l'invention et représenté schématiquement sur la figure 1, comporte un matelas 1 constitué par la superposition et la solidarisation d'une pluralité n (par exemple n = 15) de couches 2.1, ..., 2.i, ..., 2.n en tissus de fibres organiques oxydées carbonisables.

Chaque couche 2.i est par exemple réalisée dans le tissu "MONTSEGUR", qualité 7010, mentionné ci-dessus et comportant 30% de fibres d'aramide et 70% de fibres de polyacrylonitrile oxydées et carbonisables. Les couches 2.i sont liées entre elles par des points de colle (non représentées).

Du côté destiné à être tourné vers une source chaude, par exemple un incendie, le matelas 1 est recouvert d'une couche 3 de silicone pur, imprégnant les couches superficielles adjacentes 2.i dudit matelas 1. De même, du côté destiné à être opposé à ladite source chaude, le matelas est recouvert d'une couche 4 de silicone chargé endothermique, imprégnant également les couches superficielles adjacentes correspondantes dudit matelas 1. Le silicone chargé endothermique est par exemple celui décrit dans le brevet français FR-A-2 632 866.

Les couches 3 et 4 peuvent être appliquées au matelas 1 par tout processus connu, tel que moulage, trempage, pulvérisation, etc... Elles peuvent recouvrir les bords périphériques (non représentés) du matelas 1.

Ainsi, conformément à l'invention, il est possible de réaliser de écrans de matière en feuille plus ou moins souples, en fonction du nombre de couches de tissus 2.i imprégnées par le silicone.

Lorsque l'écran est souple, il peut constituer des couvertures de protection. Il peut également être découpé en bandes pour servir de protections hélicoïdales d'objets allongés, tels que tuyauteries ou câbles.

Lorsque l'écran est rigide après durcissement du silicone, il peut être élaboré dans un moule à la forme de capots de protection. Sur la figure 2, on a représenté schématiquement en coupe un tel capot 5 protégeant un équipement 6, porté par une paroi 7.

## Revendications

1. Ecran thermique, notamment pour la protection contre un incendie, comprenant
des tissus de fibres organiques oxydées carbonisables à base de polyacrylonitrile, caractérisé en ce qu' il est réalisé en une matière en feuille comportant un matelas (1) constitué par la superposition d' une pluralité de couches (2.i) desdits tissus, en ce qu' une face dudit matelas est recouverte d' une couche de silicone pur (3) et en ce que l'autre face dudit matelas est recouverte d' une couche de silicone chargé endothermique (4)''.

2. Ecran selon la revendication 1,
caractérisé en ce qu'au moins certaines couches de tissu dudit matelas sont imprégnées avec du silicone pur.

3. Ecran selon la revendication 2,
caractérisé en ce que certaines desdites couches de tissu dudit matelas sont imprégnées avec du silicone chargé endothermique.

4. Ecran selon l'une des revendications 1 à 3,
caractérisé en ce qu'au moins certaines des couches de tissu dudit matelas sont solidarisées les unes des autres par des points de piqûre.

5. Ecran selon l'une des revendications 1 à 4,
caractérisé en ce qu'au moins certaines des couches de tissu dudit matelas sont solidarisées les unes des autres par des points de colle.

6. Ecran selon l'une des revendications 1 à 5,
caractérisé en ce qu'au moins une couche d'un tissu réfractaire est incorporée audit matelas.

7. Ecran selon l'une des revendications 1 à 6,
caractérisé en ce qu'il est souple.

8. Ecran selon l'une des revendications 1 à 6,
caractérisé en ce qu'il est rigide.

9. Ecran selon l'une des revendications 1 à 7,
caractérisé en ce qu'il se présente sous la forme d'une couverture.

10. Ecran selon l'une des revendications 1 à 7,
caractérisé en ce qu'il se présente sous la forme de bandes.

11. Ecran selon l'une des revendications 1 à 8,
caractérisé en ce qu'il se présente sous la forme d'un capot moulé (5).

## Patentansprüche

1. Wärmeschirm, insbesondere für den Schutz gegen einen Brand, bestehend aus
oxydierten, verkohlbaren, organischen Fasergeweben auf Polyakrylnitrilbasis, dadurch gekennzeichnet, daß er aus einem Folienmaterial hergestellt ist, das ein Polster (1) aufweist, welches durch Übereinanderlagerung einer Vielzahl von Schichten (2.i) des besagten Gewebes gebildet ist, daß eine Seite des besagten Polsters mit einer Schicht aus reinem Silikon (3) bedeckt ist, und daß die andere Seite des besagten Polsters mit einer Schicht aus endothermisch geladenem Silikon (4)'' bedeckt ist.

2. Schirm nach dem Anspruch 1,
dadurch gekennzeichnet, daß wenigstens einige Gewebeschichten des besagten Polsters mit reinem Silikon imprägniert sind.

3. Schirm nach dem Anspruch 2,
dadurch gekennzeichnet, daß einige der besagten Gewebeschichten des besagten Polsters mit endothermisch geladenem Silikon imprägniert sind.

4. Schirm nach einem der Ansprüche 1 bis 3,
dadurch gekennzeichnet, daß wenigstens einige der Gewebeschichten des besagten polsters durch Steppstiche miteinander verbunden sind.

5. Schirm nach einem der Ansprüche 1 bis 4,
dadurch gekennzeichnet, daß wenigstens einige der Gewebeschichten des besagten Polsters durch Klebepunkte miteinander verbunden sind.

6. Schirm nach einem der Ansprüche 1 bis 5,
dadurch gekennzeichnet, daß mindestens eine Schicht aus einem feuerbeständigen Gewebe in das besagte Polcter eingefügt ist.

7. Schirm nach einem der Ansprüche 1 bis 6,
dadurch gekennzeichnet, daß er geschmeidig ist.

8. Schirm nach einem der Ansprüche 1 bis 6,
dadurch gekennzeichnet, daß er steif ist.

9. Schirm nach einem der Ansprüche 1 bis 7,
dadurch gekennzeichnet, daß er die Form einer Abdeckung aufweist.

10. Schirm nach einem der Ansprüche 1 bis 7,
dadurch gekennzeichnet, daß er die Form von Streifen aufweist.

11. Schirm nach einem der Ansprüche 1 bis 8,
dadurch gekennzeichnet, daß er die Form einer geformten Haube (5) aufweist.

## Claims

1. Heat screen, especially for protection against a fire, comprising fabrics of carbonisable oxidised organic fibres based on polyacrylonitrile, characterised in that it is made of a substance in sheet form comprising a mat (1) formed by the superposition of a plurality of layers (2.i) of the said fabrics, in that one face of the said mat is covered with a layer of pure silicone (3) and in that the other face of the said mat is covered with a layer of endothermic filled silicone (4)''.

2. Screen according to Claim 1, characterised in that at least some layers of fabric of the said mat are impregnated with pure silicone.

3. Screen according to Claim 2, characterised in that some of the said layers of fabric of the said mat are impregnated with endothermic filled silicone.

4. Screen according to one of Claims 1 to 3, characterised in that at least some of the layers of fabric of the said mat are integrally joined to one another by lockstitching.

5. Screen according to one of Claims 1 to 4, characterised in that at least some of the layers of fabric of the said mat are integrally joined to one another by points of adhesive.

6. Screen according to one of Claims 1 to 5, characterised in that at least one layer of a refractory fabric is incorporated into the said mat.

7. Screen according to one of Claims 1 to 6, characterised in that it is flexible.

8. Screen according to one of Claims 1 to 6, characterised in that it is rigid.

9. Screen according to one of Claims 1 to 7, characterised in that it is in the form of a blanket.

10. Screen according to one of Claims 1 to 7, characterised in that it is in the form of strips.

11. Screen according to one of Claims 1 to 8, characterised in that it is in the form of a moulded hood (5).
